# EUROPEAN PATENT APPLICATION

(11) **EP 4 836 217 A1**
(43) Date of publication of application: **04.11.2026**
(21) Application number: 26173953.6
(22) Date of filing: 22.04.2026
(51) Int. Cl.: H02H 7/26, H02H 3/08

(54) **CIRCUIT BREAKER, MULTIPLE POWER SUPPLY SYSTEM, RING POWER SUPPLY SYSTEM, AND PROTECTION METHODS FOR SYSTEMS**

(30) Priority: 30.04.2025 CN 202510570909
(71) Applicant: SCHNEIDER ELECTRIC INDUSTRIES SAS, 92500 Rueil-Malmaison (FR)
(72) Inventor: WANG, Haicheng, Shanghai 201203 (CN); SHI, Ying, Shanghai 201203 (CN); XU, Hui, Shanghai 201203 (CN); CHENG, Xi, Shanghai 201203 (CN); LIANG, Chao, Shanghai 201203 (CN); SUN, Haitao, Shanghai 201203 (CN)
(74) Representative: Openshaw & Co.

(57) **Abstract**

A circuit breaker, a multiple power supply system, a circular power supply system, and protection methods for both systems are provided. The circuit breaker can be configured to: respond to a current in a positive direction; and not respond to a current in a negative direction. The positive direction is a direction pointing from a nearest bus or power supply to the circuit breaker towards a line, and the negative direction is a direction pointing from the line towards the nearest bus or power supply to the circuit breaker.

## Description

### TECHNICAL FIELD

This application relates to a power distribution system, and more specifically, to a circuit breaker, a multi power supply system and its protection method, as well as a ring power supply system and its protection method.

### BACKGROUND

In one aspect, with increasing connection of new energy sources (such as photovoltaics, wind power, energy storage, and Vehicle to Grid (V2G) etc.), the architecture of the entire power distribution system has undergone significant changes, evolving from a traditional single power supply (waterfall) network to a new multiple power supply system. In the multiple power supply system, directions of short-circuit currents become very complex, and traditional protection methods based on three-stage long time, short time, instantaneous (LSI) circuit breakers cannot solve it and are no longer applicable to the protection of the multiple power supply system.

To this end, the present application provides a protection method for a multiple power supply system. By disposing circuit breakers with directional protection in the multiple power supply system, the protection challenge of multiple power supply system has been effectively solved.

The method of this application has many advantages, including but not limited to: not overly relying on communication, being implemented on traditional protection methods based on three-stage circuit breakers, low cost, simple configuration, meeting the usage habits of system maintenance personnel, and easy to promote on a large scale.

On the other hand, with the connection of new energy sources and the development of new power systems, the architecture of the entire power distribution system has undergone significant changes, evolving from the traditional single power supply network to a new multiple power supply architecture; meanwhile, due to the ease of implementing parallel connection of multiple power supplies in Direct Current (DC) systems, and the significant reduction in system costs and improvement in power supply reliability through the ring power supply architecture, the ring power supply architecture is also being increasingly applied. However, the circular power supply architecture also makes directions of short-circuit currents in the entire system exceptionally complex, and traditional protection methods based on three-stage (LSI) circuit breakers are difficult to provide effective protection for the circular power supply system.

To this end, the present application also provides a protection method for a circular power supply system. Based on the current three-stage circuit breaker, the concept of directional protection is introduced, and an optimal configuration of the circular power supply system is given, successfully solving the protection problem of the circular power supply system.

The protection method of the circular power supply system in this application does not rely on complex communication mechanisms, and requires minimal modifications to existing protection methods based on three-stage circuit breakers. It has low implementation costs, simple configuration, and is in line with the usage habits of system maintenance personnel, making it easy to promote on a large scale.

In another aspect, traditional three-stage protective circuit breakers do not have directional protection function, which makes it impossible to determine directions of different short-circuit currents and therefore cannot take appropriate protective actions for short-circuit currents in different directions.

Therefore, the present application also provides a circuit breaker with directional protection (function). This type of circuit breaker with directional protection is applied in the protection method of the multiple power supply system and the protection method of the ring power supply system in the present application.

### SUMMARY

In one aspect of the present application, a circuit breaker is provided. The circuit breaker can be configured to: respond to a current in a positive direction; and do not respond to a current in a negative direction, wherein the positive direction is a direction pointing from the nearest bus or power supply to the circuit breaker towards a line, and wherein the negative direction is a direction pointing from the line towards the nearest bus or power supply to the circuit breaker.

In another aspect of the present application, there is also provided a method for protecting a multiple power supply system, which may include a plurality of power supplies. The method may include: disposing a first circuit breaker and a second circuit breaker respectively at both ends of all other lines except for a pure load branch, wherein the first circuit breaker and the second circuit breaker can respectively respond to a current in a positive direction thereof and do not respond to a current in a negative direction thereof, wherein the positive direction is a direction pointing from the nearest bus or power supply to the corresponding circuit breaker towards a line, and wherein the negative direction is a direction pointing from the line toward the nearest bus or power supply to the corresponding circuit breaker.

In some implementations, in the method for protecting the multiple power supply system, when the circuit breaker that should respond to the current in the positive direction thereof on the line where the first circuit breaker and the second circuit breaker are located is not functioning properly, both the first circuit breaker and the second circuit breaker are capable of self-protection against abnormally large short-circuit currents in the negative direction thereof.

In some implementations, in the method for protecting the multiple power supply system, the number of the plurality of power supplies may be n, wherein n may be an integer greater than or equal to 2.

In some implementations, in the method for protecting the multiple power supply system, a bus to which the plurality of power supplies are commonly connected is defined as a primary bus, and there may also be m buses between each power supply and the primary bus, wherein m can be an integer greater than or equal to 0.

In some implementations, in the method for protecting the multiple power supply system, in the case of a short line, the first circuit breaker and the second circuit breaker may be the same circuit breaker, which can respond in both positive and negative directions according to different time delay protection settings.

In some implementations, the method for protecting the multiple power supply system may further include: omitting the circuit breaker close to the power supply from the first and second circuit breakers, and only disposing the other circuit breaker from the first and second circuit breakers, in the case where the power supply has short-circuit fault ride-through capability., wherein the power supply participates in time delay grading coordination.

In some implementations, in the method for protecting the multiple power supply system, the multiple power supply system may further include a pure load branch, and the method further comprises disposing a circuit breaker without directional protection on a line of the pure load branch.

In some implementations, the method for protecting the multiple power supply system may further include: starting from a short-circuit fault position at the farthest end of the line with the highest number of line levels among all lines in the multiple power supply system and along all possible short-circuit current paths, time delay grading coordination is performed on all circuit breakers that respond to currents in the positive direction to ensure that the time delay protection settings of all circuit breakers that respond to currents in the positive direction meet requirements of grading coordination.

In some implementations, in the method for protecting the multiple power supply system, short-circuit fault positions at the farthest ends of each line in all lines are taken into account when performing the time delay grading coordination, and when a short-circuit fault occurs at the corresponding position, the time delay protection settings of the circuit breakers in all possible short-circuit current paths that respond to the currents in the positive direction meet the requirements of grading coordination.

In some implementations, in the method for protecting the multiple power supply system, it is ensured that the time delay protection settings of all circuit breakers and power supplies are configured when performing the time delay grading coordination, and that the power supplies and circuit breakers that respond to currents in the positive direction on all possible short-circuit current paths meet the requirements of grading coordination.

In some implementations, the method for protecting the multiple power supply system may further include: without omitting the circuit breaker near the power supply, both the circuit breaker and the power supply participate in the time delay grading coordination.

In some implementations, in the method for protecting the multiple power supply system, the multiple power supply system may further include a bus tie circuit breaker, which may be a circuit breaker with directional protection.

In some implementations, in the method for protecting the multiple power supply system, the bus tie circuit breaker may occupy a level of time delay protection setting and may participate in the time delay grading coordination.

In some implementations, in the method for protecting the multiple power supply system, the time delay protection settings of the bus tie circuit breaker may be set as a first time delay protection setting and a second time delay protection setting, respectively, wherein the first time delay protection setting may be for short-circuit currents flowing from a first side to a second side of the bus tie circuit breaker. The first time delay protection setting may be the maximum value among the time delay protection settings determined by performing the time delay grading coordination on all possible short-circuit current paths starting from the farthest ends of all lines on the second side of the bus tie circuit breaker. The second time delay protection setting may be for short-circuit currents flowing from the second side to the first side of the bus tie circuit breaker. The second time delay protection setting may be the maximum value among the time delay protection settings determined by performing the time delay grading coordination on all possible short-circuit current paths starting from the farthest ends of all lines on the first side of the bus tie circuit breaker. The second time delay protection setting may be for short-circuit currents flowing from the second side to the first side of the bus tie circuit breaker.

In some implementations, in the method for protecting the multiple power supply system, the bus tie circuit breaker may be a circuit breaker without directional protection in the case that the first time delay protection setting is equal to the second time delay protection setting.

In some implementations, the method for protecting the multiple power supply system may further include: determining the time delay protection settings of the power supply and the circuit breaker that responds to the current in the positive direction on the first side of the bus tie circuit breaker by performing time delay grading coordination on the basis of the first time delay protection setting of the bus tie circuit breaker, in the case that the first time delay protection setting is determined; and determining the time delay protection settings of the power supply and the circuit breaker that responds to the current in the positive direction on the second side of the bus tie circuit breaker by performing time delay grading coordination on the basis of the second time delay protection setting of the bus tie circuit breaker, in the case that the second time delay protection setting is determined.

In some implementations, in the method for protecting the multiple power supply system, the difference in the time delay grading coordination is determined in conjunction with a trip time of a circuit breaker.

In some implementations, in the method for protecting the multiple power supply system, the multiple power supply system may further include a loop.

In another aspect of the present application, there is also provided a method for protecting a circular power supply system, which may include a power supply and a loop. The loop may include n distribution cabinets connected to each other through lines to form a part of the loop. The method may include: disposing one circuit breaker with directional protection respectively at both ends of n+1 lines on the loop, except for an incoming bus, so that a total of 2n+2 circuit breakers are disposed on the loop. Wherein all the 2n+2 circuit breakers can respond to a current in a positive direction thereof and do not respond to a current in a negative direction thereof. Wherein the positive direction is a direction pointing from a bus closest to a corresponding circuit breaker towards a line, and the negative direction is a direction pointing from the line to the bus closest to the corresponding circuit breaker.

In some implementations, in the method for protecting the circular power supply system, when the circuit breakers that should respond to the current in the positive direction thereof on the lines where the 2n+2 circuit breakers are located are not working properly, all the 2n+2 circuit breakers are able to self-protect against abnormally large short-circuit currents in the negative direction thereof.

In some implementations, in the method for protecting the circular power supply system, the circular power supply system may further include an incoming bus tie switch that remains closed during normal operation.

In some implementations, in the method for protecting the circular power supply system, there are power supplies on both sides of the incoming bus tie switch that supply power to the ring.

In some implementations, in the method for protecting the circular power supply system, the incoming bus tie switch does not have a protective function.

In some implementations, in the method for protecting the circular power supply system, when a fault occurs in the incoming bus, the incoming bus tie switch cooperates with bus differential protection to isolate the bus fault range.

In some implementations, in the method for protecting the circular power supply system, a time delay grading coordination is formed between n+1 circuit breakers whose positive direction is in the clockwise direction among the 2n+2 circuit breakers on the loop except for the incoming bus tie switch, and the time delay protection settings increase incrementally from the circuit breaker at the farthest end from the power supply to meet grading coordination requirements. In addition, a time delay grading coordination is formed between n+1 circuit breakers whose positive direction is in the counterclockwise direction among the 2n+2 circuit breakers on the loop except for the incoming bus tie switch, and the time delay protection settings increase incrementally from the circuit breaker at the farthest end from the power supply to meet the grading coordination requirements.

In some implementations, the method for protecting the circular power supply system may further include: disposing a circuit breaker with directional protection on the line where the power supply is located, which responds to a current from the bus and has instantaneous protection, or the time delay protection setting of the circuit breaker is T=0.

In some implementations, the method for protecting the circular power supply system may further include: disposing a circuit breaker without directional protection on a line where a load is located, which has instantaneous protection, or the time delay protection setting of the circuit breaker is T=0.

In some implementations, in the method for protecting the circular power supply system, the time delay protection setting of T=0 represents the minimum value among all possible time delay protection settings.

In some implementations, in the method for protecting the circular power supply system, the power supply may have short-circuit fault ride through capability, and the method may further include: obtaining the time delay protection setting of the power supply by incrementing on the basis of a time delay protection setting determined according to the maximum value of the number of distribution cabinets connected to each other on each loop within the circular power supply system.

In some implementations, the method for protecting the circular power supply system may further include: obtaining the time delay protection setting of the power supply by incrementing according to the number of buses between the power supply and a primary bus on the basis of the obtained time delay protection setting, and the bus to which the power supplies are commonly connected is defined as the primary bus.

In some implementations, in the method for protecting the circular power supply system, the number of distribution cabinets connected to each other on each loop may be an integer greater than or equal to 1.

In some implementations, in the method for protecting the circular power supply system, the number of power supplies may be n', wherein n' may be an integer greater than or equal to 1.

In some implementations, in the method for protecting the circular power supply system, there may also be m buses between each power supply and the primary bus, wherein m can be an integer greater than or equal to 0.

In some implementations, in the method for protecting the circular power supply system, a level difference in the time delay grading coordination is determined in conjunction with the trip time of the circuit breaker.

In another aspect of the present application, a multiple power supply system is also provided, the multiple power supply system is configured to perform the method for protecting the multiple power supply system as described herein.

In another aspect of the present application, a circular power supply system is also provided, the circular power supply system is configured to perform the method for protecting the circular power supply system as described herein.

### BRIEF DESCRIPTION OF DRAWINGS

Through the following detailed description in connection with the accompanying drawings, it will be easier to understand the present application, wherein the same reference numerals designate units with the same structure, and in the accompanying drawings:
Figure 1 shows a schematic diagram of a problem encountered when applying a traditional three-stage circuit breaker based protection method to a multiple power supply system;
Figure 2 is a schematic diagram illustrating a protection method of a multiple power supply system without a bus tie circuit breaker according to an embodiment of the present application;
Figure 3 is a schematic diagram illustrating a protection method of a multiple power supply system with a bus tie circuit breaker according to an embodiment of the present application;
Figure 4 is a schematic diagram illustrating a protection method of a circular power supply system according to an embodiment of the present application;
Figure 5 is a schematic structural diagram illustrating a circuit breaker with directional protection according to an embodiment of the present application;
Figure 6 is a schematic structural diagram illustrating a multiple power supply system according to an embodiment of the present application; and
Figure 7 is a schematic structural diagram showing a circular power supply system according to an embodiment of the present application.

### DETAILED DESCRIPTION

Below, the technical solutions in the embodiments of the present application will be clearly and completely described in conjunction with the accompanying drawings. Obviously, the described embodiments are a part of the embodiments of the present application, not all of them. Based on the embodiments in this application, all other embodiments obtained by ordinary skilled persons in this field without creative labor are within the scope of protection of this application.

In addition, it should be noted that in this specification, A connected to B can mean "A directly connected to B" or "A connected to B via another middleware". Connecting A between B and C can mean 'A is directly connected to B and C' or 'A is connected to B and C through other middleware'.

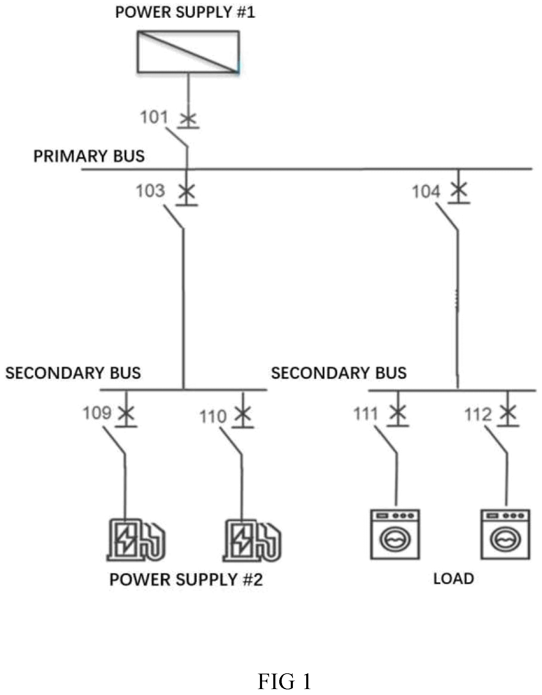

In a multiple power supply system, traditional protection methods based on three-stage circuit breakers cannot meet the requirements of selective coordination. The problem arising from this is described in more detail below with reference to Figure 1.

This application provides a circuit breaker (with directional protection). The circuit breaker with directional protection in this application is based on the traditional three-stage circuit breaker, adding directional protection function to enable the circuit breaker to determine different directions of short-circuit currents and take different protective actions for short-circuit currents in different directions.

Specifically, according to embodiments of the present application, a circuit breaker can be configured to: respond to a current in a positive direction and do not respond to a current in a negative direction. In embodiments, the positive direction may be a direction pointing from the nearest bus or power supply to the circuit breaker towards a line. In embodiments, the negative direction may be a direction pointing from the line towards the nearest bus or power supply to the circuit breaker. It should be understood that the positive and negative directions in this application are defined for the purpose of ease of explanation, but are not limited to this.

In the accompanying drawings of this application, a low-voltage distribution system is taken as an example for explanation, but those skilled in the art will understand that the protection method of the multiple power supply system and the protection method of the circular power supply system of this application can also be applied to medium voltage distribution systems and/or high-voltage distribution systems.

The types of power supplies involved in the multiple power supply system and the circular power supply system of this application include, but are not limited to, power grids, energy storage, photovoltaics, wind power, V2G, etc.

The protection methods of the multiple power supply system and the circular power supply system in this application can be applied to various new power systems, including but not limited to DC distribution, DC microgrid, AC microgrid, etc.

The numbers of power supplies, loads, lines, their connection relationships, and circuit topologies in the multiple power supply system and circular power supply system shown in the accompanying drawings of this application are exemplary, but not limited to them.

The time delay protection settings (e.g. T=0 to T=4) in the accompanying drawings of this application only represent the relative magnitude relationship of the time delay protection settings, rather than the absolute time magnitude. In this application, the time represented by the time delay protection setting (T=0) is less than the time represented by the time delay protection setting (T=1), which is less than the time represented by the time delay protection setting (T=2), which is less than the time represented by the time delay protection setting (T=3), which is less than the time represented by the time delay protection setting (T=4), and so on.

The time delay protection setting range (T=0 to T=4) in the accompanying drawings of this application is given under a specific circuit topology, and those skilled in the art should understand that the time delay protection setting range is not limited to this. For different circuit topologies, there may be higher levels of time delay protection settings than the maximum time delay protection setting (T=4) shown, such as T=5, T=6, etc.

In embodiments, the level difference in the time delay grading coordination can be determined in conjunction with the trip time of the circuit breaker.

The arrows shown in the accompanying drawings of this application represent the direction of the short-circuit current that the corresponding circuit breaker responds to, and the corresponding circuit breaker trips (e.g. disconnect) in response to the short-circuit current in that direction according to the corresponding time delay protection setting. In this application, 'a circuit breaker responds to a current in a positive direction' means that when the amplitude of the short-circuit current in the positive direction meets a condition, the circuit breaker responds to the short-circuit current according to the corresponding time delay protection setting to disconnect the circuit breaker. In this application, 'a circuit breaker does not respond to a current in a negative direction' means that the circuit breaker allows current in the negative direction to pass through without disconnecting. But in specific situations, such as when the paired circuit breaker that responds to the current in the positive direction does not disconnect properly and/or the current in the negative direction is abnormally large, the circuit breaker that should not respond to the current in the negative direction can also perform self-protection and disconnect.

In the accompanying drawings of this application, the circuit breaker corresponding to the arrow represents a circuit breaker with directional protection. In circuit breakers with directional protection, directional protection can be combined with any of the three LSI segments. In the drawings of this application, circuit breakers that do not correspond to arrows represent circuit breakers without directional protection.

Figure 1 shows a schematic diagram of a problem encountered when applying a traditional three-stage circuit breaker based protection method to a multiple power supply system.

As shown in Figure 1, the multiple power supply system includes a power supply # 1, a power supply # 2, and a load. The power supply # 1, the power supply # 2, and the load are connected through lines (including buses). As shown in Figure 1, the bus to which the power supply # 1 and the power supply # 2 are commonly connected (the upper bus in the figure) is defined as the primary bus, and there is also one bus between the power supply # 2 and the primary bus. As shown in Figure 1, the bus directly connected to power supply # 2 is defined as a secondary bus.

In the traditional protection method based on three-stage circuit breakers, a circuit breaker 101 is disposed on the line between the primary bus and the power supply # 1. Similarly, circuit breakers 103, 109, and 110, as well as circuit breakers 104, 111, and 112, are respectively disposed on the lines between the primary bus and the power supply # 2, and between the primary bus and the load, as shown in Figure 1. The circuit breakers 103, 109, and 110, as well as circuit breakers 104, 111, and 112, are all circuit breakers without directional protection.

In multiple power supply system, traditional protection methods based on three-stage circuit breakers cannot meet the requirements of selective coordination. The reason is that short-circuit faults may occur at different locations in multiple power supply system, and the direction of short-circuit current changes with the location of the fault, making the path of short-circuit current more complex. This leads to conflicting requirements for the delay protection settings of the same circuit breaker for short-circuit currents in the positive and negative directions when configuring the time delay protection setting, which cannot meet the requirements of selective coordination.

Taking Figure 1 as an example, when a short circuit fault occurs at the branch where the power supply # 1 is located, in order to meet the requirements of selective coordination, the circuit breaker 101 should trip earlier than the circuit breaker 103. When a short circuit fault occurs at the branch where the power supply # 2 is located, in order to meet the requirements of selective coordination, the circuit breaker 103 should trip earlier than the circuit breaker 101. In this case, in order to meet the requirements of selective coordination, there is a contradiction in the order of trips of the circuit breaker 103 and the circuit breaker 101 for short-circuit currents in both directions. It can be seen that traditional protection methods based on three-stage circuit breakers cannot meet the requirements of selective coordination when applied to the multiple power supply system.

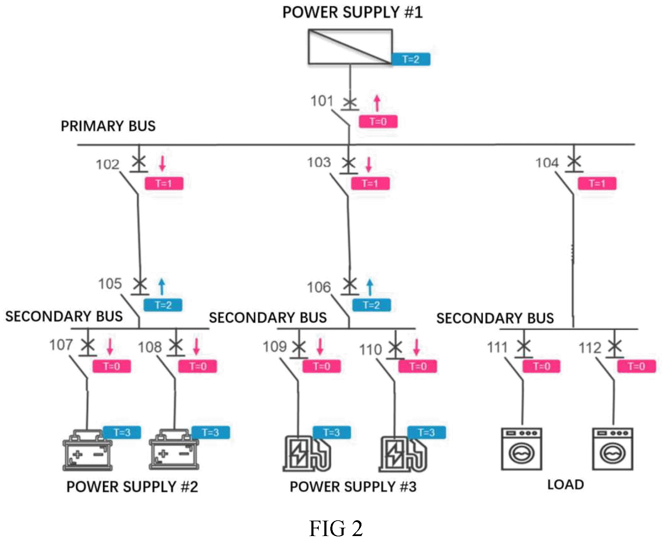

Figure 2 is a schematic diagram illustrating a protection method of a multiple power supply system without a bus tie circuit breaker according to an embodiment of the present application.

In the embodiment, the number of a plurality of power supplies included in the multiple power supply system can be n, wherein n can be an integer greater than or equal to 2. In the embodiment, a bus to which the plurality of power supplies are commonly connected is defined as a primary bus (the upper bus in the figure), and there may be m buses between each power supply and the primary bus, wherein m can be an integer greater than or equal to 0. In the example shown in Figure 2, for the power supply # 1, m is 0, and for power supply # 2 and power supply # 3, m is 1.

A method for protecting the multi power supply system of the present application may include: disposing a first circuit breaker and a second circuit breaker respectively at both ends of all other lines except for a pure load branch, wherein the first circuit breaker and the second circuit breaker respectively responds to a current in a positive direction thereof and does not respond to a current in a negative direction thereof, wherein the positive direction is a direction pointing from the nearest bus or power supply to the corresponding circuit breaker towards a line, and wherein the negative direction is a direction pointing from the line to the nearest bus or power supply to the corresponding circuit breaker.

As shown in Figure 2, the multiple power supply system includes a power supply # 1, a power supply # 2, and a power supply # 3. In addition, the multiple power supply system can also include loads. Similar to Figure 1, a circuit breaker 101 is disposed on a line between the primary bus and the power supply # 1. Circuit breakers 102, 105, 107, and 108 are disposed on lines between the primary bus and the power supply # 2. Circuit breakers 103, 106, 109, and 110 are disposed on lines between the primary bus and power supply # 3. Circuit breakers 104, 111, and 112 are disposed on lines between the primary bus and the loads. In Figure 2, the lines where the circuit breakers 101, 102, 105, 107, 108, 103, 106, 109, and 110 are located are the lines other than the pure load branch. As shown in the figure, the bus to which the power supply # 2 and the power supply # 3 are connected is defined as a secondary bus.

According to the method of the present application, a first circuit breaker and a second circuit breaker can be respectively disposed at both ends of the lines (the lines where circuit breakers 101, 102, 105, 107, 108, 103, 106, 109, and 110 are located) except for the pure load branch (for the convenience of explanation, only the case where one circuit breaker is respectively disposed at both ends of the line where circuit breakers 102 and 105 are located and the line where circuit breakers 103 and 106 are located is shown. However, it is not limited to this, and one circuit breaker can also be respectively disposed at both ends of the lines where circuit breakers 101, 107, 108, 109, and 110 are located). The first circuit breaker and the second circuit breaker respectively responds to a current in a positive direction thereof and does not respond to a current in a negative direction thereof. Wherein the positive direction is a direction pointing from the nearest bus or power supply to the corresponding circuit breaker towards a line, and wherein the negative direction is a direction pointing from the line to the nearest bus or power supply to the corresponding circuit breaker.

In the embodiment, when the circuit breaker that should respond to the current in the positive direction thereof on the line where the first circuit breaker and the second circuit breaker are located is not functioning properly, both the first circuit breaker and the second circuit breaker are capable of self-protection against abnormally large short-circuit currents in the negative direction thereof.

For example, according to the method of the present application, circuit breakers 102 and 105 are respectively disposed at both ends of the line where the circuit breakers 102 and 105 are located, and these two circuit breakers 102 and 105 respectively responds to a current in a positive direction thereof(as shown in Figure 2, the circuit breaker 102 responds to the downward direction current and does not respond to the upward direction current, while circuit breaker 105 responds to the upward direction current and does not respond to the downward direction current). The downward direction is the positive direction for the circuit breaker 102, which is a direction points from the nearest bus to the circuit breaker 102 towards the line, and the upward direction is the negative direction for the circuit breaker 102, which is a direction points from the line towards the nearest bus to circuit breaker 102; the upward direction is the positive direction for the circuit breaker 105, which is a direction pointing from the nearest bus to circuit breaker 105 towards the line, and the downward direction is the negative direction for the circuit breaker 105, which is a direction pointing from the line towards the nearest bus to circuit breaker 105.

In the embodiment, in the case of short lines and/or for cost saving considerations, circuit breakers 102 and 105 may be the same circuit breaker, which responds in two directions according to different time delay protection settings. For example, in the situation shown in Figure 2, the circuit breaker can respond to the short-circuit current in the downward direction according to the time delay protection setting T=1, and can respond to the short-circuit current in the upward direction according to the time delay protection setting T=2. Technicians in this field should understand that the configuration of replacing two circuit breakers with the same circuit breaker can also be applied to other lines (such as the line where circuit breakers 103 and 106 are located, or the lines where the power supplies are located).

In the embodiment, the power supply may have short-circuit fault ride through capability (i.e., the ability to maintain short-circuit operation for a certain period of time, and after exceeding the delay time, the power supply enters self-protection). But this is not necessary, and the protection method of the present application can also be applied to a multiple power supply system or a circular power supply system including power supplies that do not have short-circuit fault ride through capability.

As shown in Figure 2, the power supply # 1, the power supply # 2, and the power supply # 3 are all marked with time delay protection settings (T=2 and T=3, respectively), representing that the power supply # 1, the power supply # 2, and the power supply # 3 are all power supplies with short-circuit fault ride through capability. In this case, the circuit breaker close to the corresponding power supply among the two circuit breakers that should have been disposed at both ends of the lines where the power supply # 1, the power supply # 2, and the power supply # 3 are located can be omitted, and only the other circuit breaker (i.e. the circuit breaker close to the corresponding bus) can be disposed. In this case, the power supply # 1, the power supply # 2, and the power supply # 3 all participate in time delay grading coordination according to the time delay protection setting.

For the pure load branch on the far right in Figure 2, one circuit breaker can be disposed on each line of the pure load branch, such as circuit breakers 104, 111, and 112. These three circuit breakers can be circuit breakers without directional protection. The time delay protection settings of circuit breakers 104, 111, and 112 are shown in Figure 2.

According to the implementations of the present application, in the multiple power supply system, the time delay protection settings of circuit breakers for short-circuit faults at different positions can be configured as follows: starting from the farthest short-circuit fault position of the line with the highest number of line levels among all lines in the multiple power supply system, along all possible short-circuit current paths, time delay grading coordination is applied to all circuit breakers that respond to currents in the positive direction to ensure that the time delay protection settings of all circuit breakers that respond to currents in the positive direction meet requirements of grading coordination.

For example, as shown in Figure 2, starting from the short-circuit fault locations at the farthest ends (at the power supply # 2, the power supply # 3, and the load) of the line (the lines where the power supply # 2, the power supply # 3, and the load are located) with the highest number of line levels among all lines, along all possible short-circuit current paths (paths in which short-circuit current comes from the power supply # 1, the power supply # 2, and the power supply # 3), time delay grading coordination is applied to all circuit breakers that respond to currents in the positive direction to ensure that the time delay protection settings of all circuit breakers that respond to currents in the positive direction meet requirements of grading coordination.

In the embodiment, in the event of a short circuit fault occurs at the line where the circuit breaker 111 is located, the circuit breaker 111 trips with a time delay protection setting of T=0; the circuit breaker 104 trips with a time delay protection setting of T=1 greater than T=0; the power supply # 1 trips with a time delay protection setting of T=2 greater than T=1; On the line where circuit breakers 103 and 106 are located, the circuit breaker 106 trips with a time delay protection setting of T=2 greater than T=1; the power supply # 3 trips with a time delay protection setting of T=3 greater than T=2; On the line where the circuit breakers 102 and 105 are located, the circuit breaker 105 trips with a time delay protection setting of T=2 greater than T=1; the power supply # 2 trips with a time delay protection setting of T=3 greater than T=2, so that these circuit breakers and power supplies meet the requirements of grading coordination. In the event of a short circuit fault occurs at the circuit breaker 111, the circuit breakers 101, 102, 103, 107, 108, 109, and 110, which are used to respond to currents in the opposite direction of the short circuit current, do not trip.

In another embodiment, the situation where a short circuit fault occurs at the line where circuit breaker 112 is located is similar to the situation where a short circuit fault occurs at circuit breaker 111, and will not be repeated here.

In another embodiment, in the event of a short circuit fault occurs at the line where circuit breaker 107 is located, the circuit breaker 107 trips with a time delay protection setting of T=0; On the line where circuit breakers 102 and 105 are located, the circuit breaker 102 trips with a time delay protection setting of T=1 greater than T=0; the power supply # 1 trips with a time delay protection setting of T=2 greater than T=1; On the line where circuit breakers 103 and 106 are located, the circuit breaker 106 trips with a time delay protection setting of T=2 greater than T=1; the power supply # 3 trips with a time delay protection setting of T=3 greater than T=2; On the line where the circuit breaker 108 is located, the power supply # 2 trips with a time delay protection setting of T=3 greater than T=0, so that these circuit breakers and power supplies also meet the requirements of grading coordination. On the lines where the loads are located, there is no current flowing in the direction of the circuit breaker 107, and the circuit breakers 104, 111, and 112 do not trip. In the event of a short circuit fault occurs at the circuit breaker 107, the circuit breakers 101, 103, 105, 108, 109, and 110, which are used to respond to currents in the opposite direction of the short circuit current, do not trip.

In another embodiment, the situation where a short circuit fault occurs at the line where the circuit breakers 108, 109, and 110 are located is similar to the situation where a short circuit fault occurs at the circuit breaker 107, and will not be repeated here.

In another embodiment, in the event of a short circuit fault occurs at the line where the circuit breaker 101 is located, the circuit breaker 101 trips with a time delay protection setting of T=0; On the line where the circuit breakers 102 and 105 are located, the circuit breaker 105 trips with a time delay protection setting of T=2 greater than T=0; the power supply # 2 trips with a time delay protection setting of T=3 greater than T=2; On the line where the circuit breakers 103 and 106 are located, the circuit breaker 106 trips with a time delay protection setting of T=2 greater than T=0; the power supply # 3 trips with a time delay protection setting of T=3 greater than T=2, so that these circuit breakers and power supplies also meet the requirements of grading coordination. On the lines where the loads are located, there is no current flowing towards the circuit breaker 101, and the circuit breakers 104, 111, and 112 do not trip; In the event of a short circuit fault occurs at the circuit breaker 101, the circuit breakers 102, 103, 107, 108, 109, and 110, which are used to respond to currents in the opposite direction of the short circuit current, do not trip.

In this way, when performing time delay grading coordination, the short-circuit fault positions at farthest end of each line in all lines are taken into account, and when a short-circuit fault occurs at the corresponding position, the time delay protection settings of the circuit breakers in all possible short-circuit current paths that respond to the currents in the positive direction meet the requirements of grading coordination.

In addition, it is ensured that the time delay protection settings of all circuit breakers and power supplies are configured when performing the time delay grading coordination, and that the power supplies and circuit breakers that respond to currents in the positive direction on all possible short-circuit current paths meet the requirements of grading coordination.

In the embodiment, without omitting the circuit breaker near the power supply (not shown), both the circuit breaker and the power supply participate in the time delay grading coordination. At this point, the time delay protection setting of the power supply can be one level higher than the time delay protection setting of the circuit breaker close to the power supply.

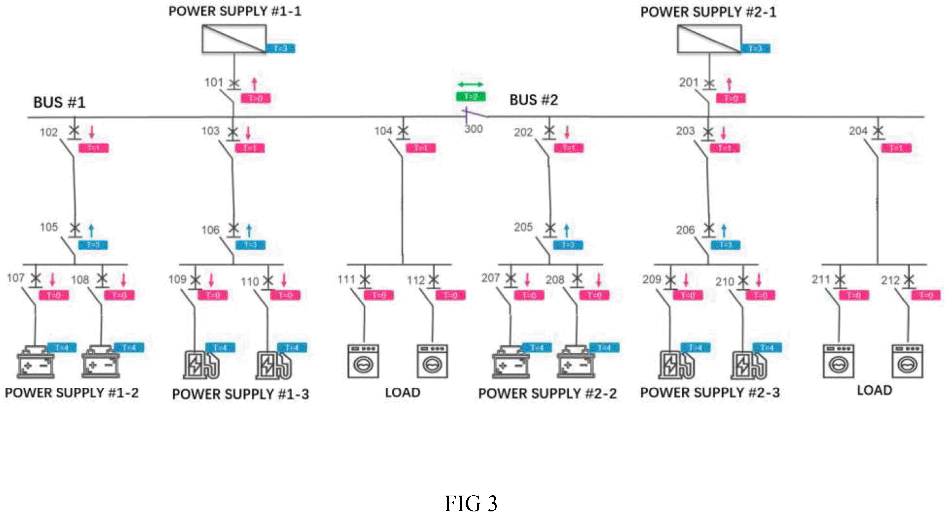

Figure 3 is a schematic diagram illustrating a protection method of a multiple power supply system with a bus tie circuit breaker according to an embodiment of the present application.

As shown in Figure 3, a multiple power supply system can include a power supply # 1-1, a power supply # 1-2, a power supply # 1-3, a power supply # 2-1, a power supply # 2-2, a power supply # 2-3, and loads. The multiple power supply system also includes a plurality of buses, including e.g., a bus # 1 and a bus # 2 and so on. The bus # 1 and the bus # 2 are defined as primary buses. Similar to Figures 1 and 2, a circuit breaker 101 is disposed on the line between the bus # 1 and the power supply # 1-1. Circuit breakers 102, 105, 107, and 108 are disposed on the lines between the bus # 1 and the power supply # 1-2. The circuit breakers 103, 106, 109, and 110 are disposed on the lines between the bus # 1 and the power supply # 1-3. Circuit breakers 104, 111, and 112 are disposed on the lines between the bus # 1 and the loads. The circuit breaker 201 is disposed on the line between the bus # 2 and the power supply # 2-1. The circuit breakers 202, 205, 207, and 208 are disposed on the lines between the bus # 2 and the power supply # 2-2. The circuit breakers 203, 206, 209, and 210 are disposed on the lines between the bus # 2 and the power supply # 2-3. The circuit breakers 204, 211, and 212 are disposed on the lines between the bus # 2 and the loads. The bus # 1 and the bus # 2 are connected through a bus tie circuit breaker (also known as a bus tie switch) 300.

In the embodiment, the bus tie circuit breaker 300 can be a circuit breaker with directional protection (as indicated by the green bidirectional arrow in Figure 3), and the time delay protection settings for both directions need to be set separately.

In the embodiment, the bus tie circuit breaker 300 can occupy a level of time delay protection setting and participate in the time delay grading coordination. In this case, when a short circuit fault occurs on either side of the bus tie circuit breaker 300, the bus tie circuit breaker can be disconnected to isolate the affected range of the fault.

In the embodiment, the time delay protection settings of the bus tie circuit breaker 300 can be set as a first time delay protection setting and a second time delay protection setting, respectively. In the embodiment, the first delay protection setting may be for short-circuit currents flowing from a first side to a second side of the bus tie circuit breaker, and the first time delay protection setting may be the maximum value among the time delay protection settings determined by performing the time delay grading coordination on all possible short-circuit current paths starting from the farthest ends of all lines on the second side of the bus tie circuit breaker. In the embodiment, the second time delay protection setting may be for short-circuit currents flowing from the second side to the first side of the bus tie circuit breaker, and the second time delay protection setting may be the maximum value among the time delay protection settings determined by performing the time delay grading coordination on all possible short-circuit current paths starting from the farthest ends of all lines on the first side of the bus tie circuit breaker.

For example, in Figure 3, the first time delay protection setting can be for the short-circuit currents flowing from the left side to the right side of the bus tie circuit breaker 300. The first time delay protection setting (T=2) can be the maximum value (T=2) of the time delay protection settings (T=1 and T=2) determined by performing the time delay grading coordination on all possible short-circuit current paths starting from the farthest ends (the power supply # 2-1, the power supply # 2-2, the power supply # 2-3, the loads) of all lines (the lines where the power supply # 2-1, the power supply # 2-2, the power supply # 2-3, and the loads are located) on the right side of the bus tie circuit breaker . In the embodiment, the second time delay protection setting may be for the short-circuit current flowing from the right side to the left side of the bus tie circuit breaker. The second time delay protection setting (T=2) may be the maximum value (T=2) of the time delay protection settings (T=1 and T=2) determined by performing the time delay grading coordination on all possible short-circuit current paths starting from the farthest ends (the power supply # 1-1, the power supply # 1-2, the power supply # 1-3, the loads) of all lines (the lines where the power supply # 1-1, the power supply # 1-2, the power supply # 1-3, and the loads are located) on the left side of the bus tie circuit breaker.

It should be noted that in the situation shown in Figure 3, since the circuits on both sides of the bus tie circuit breaker 300 are symmetrical, the first time delay protection setting and the second time delay protection setting of the bus tie circuit breaker are equal, both T=2. In the embodiment, in the case that the first time delay protection setting and the second time delay protection setting of the bus tie circuit breaker are equal, the bus tie circuit breaker 300 may be a circuit breaker without directional protection.

Similar to the situation in Figure 2, for the two load branches in Figure 3, one circuit breaker can be disposed on each line, namely the circuit breakers 104, 111, 112, 204, 211, and 212. These circuit breakers can be circuit breakers which do not have directional protection. The time delay protection settings of the circuit breakers 104, 111, 112, 204, 211, and 212 are shown in Figure 3.

In Figure 3, the circuit breaker 101 with directional protection is disposed on the line where the power supply # 1-1 is located, the circuit breakers 107 and 108 with directional protection are respectively disposed on the two lines where the power supply # 1-2 is located, and the circuit breakers 109 and 110 with directional protection are respectively disposed on the two lines where the power supply # 1-3 is located. The circuit breaker 201 with directional protection is disposed on the line where the power supply # 2-1 is located, the circuit breakers 207 and 208 with directional protection are respectively disposed on the two lines where the power supply # 2-2 is located, and the circuit breakers 209 and 210 with directional protection are respectively disposed on the two lines where the power supply # 2-3 is located. These circuit breakers trip according to the time delay protection settings shown in Figure 3 in response to the respective currents in the positive direction thereof. As described with reference to Figure 2, the power supply # 1-1, the power supply # 1-2, the power supply # 1-3, the power supply # 2-1, the power supply # 2-2, and the power supply # 2-3 shown in Figure 3 all have short-circuit fault ride through capability. Therefore, the situation where the circuit breaker near the power supply is omitted is shown in Figure 3. The time delay protection settings for each power supply are shown in Figure 3. Technicians in this field should understand that this application is not limited to this, that is, one circuit breaker with directional protection can be respectively disposed at both ends of the lines where the power supply # 1-1, the power supply # 1-2, the power supply # 1-3, the power supply # 2-1, the power supply # 2-2, and the power supply # 2-3 are located. Circuit breakers and power supplies on the same line need to meet the requirements of time delay grading coordination.

As shown in Figure 3, for the lines on the left or right side of the bus tie circuit breaker 300, such as the lines where the circuit breakers 102, 105, 103, and 106 are located in Figure 3, as well as the lines where the circuit breakers 202, 205, 203, and 206 are located, circuit breakers with directional protection can be respectively disposed at both ends of each line, and each circuit breaker is configured to protect against short-circuit currents in the positive direction. The time delay protection settings for each of the circuit breakers 102, 105, 103, 106, as well as the circuit breakers 202, 205, 203, 206, are shown in Figure 3. In the embodiment, the time delay protection setting of each of the circuit breakers 105, 106, 205, 206 can be implemented by extending on the basis of the time delay protection setting of the bus tie circuit breaker 300. For example, in the case where the time delay protection setting of the bus tie circuit breaker 300 is T=2, the time delay protection setting of each of the circuit breakers 105, 106, 205, 206 can be extended to T=3 on the basis of T=2.

Compared with the protection method of the multiple power supply system without the bus tie circuit breaker shown in Figure 2, the time delay protection setting of the power supply itself should also consider the time delay protection setting of the bus tie circuit breaker 300, and be implemented by extending incrementally. For example, in Figure 3, the time delay protection settings of the power supply # 1-1 and the power supply # 2-1 are both extended incrementally on the basis of the time delay protection setting T=2 of bus tie circuit breaker 300 to T=3. For another example, in Figure 3, the time delay protection settings of the power supply # 1-2, the power supply # 1-3, the power supply # 2-2, and the power supply # 2-3 are all extended incrementally on the basis of the time delay protection setting value T=3 of circuit breakers 105, 106, 205, and 206, extended incrementally based on the time delay protection setting T=2 of the bus tie circuit breaker 300, to T=4.

In the embodiment, in the case that the first time delay protection setting of the bus tie circuit breaker is determined, the time delay protection settings of the power supply and the circuit breaker that responds to the current in the positive direction on the first side of the bus tie circuit breaker are determined by performing the time delay grading coordination on the basis of the first time delay protection setting of the bus tie circuit breaker.

In the embodiment, in the case that the second time delay protection setting of the bus tie circuit breaker is determined, the time delay protection settings of the power supply and the circuit breaker that responds to the current in the positive direction on the second side of the bus tie circuit breaker are determined by performing the time delay grading coordination on the basis of the second time delay protection setting of the bus tie circuit breaker.

In the embodiment, in the event of a short circuit fault occurs at the line where the circuit breaker 111 is located, the circuit breaker 111 trips with a time delay protection setting of T=0; the circuit breaker 104 trips with a time delay protection setting of T=1 greater than T=0; the bus tie circuit breaker 300 trips with a time delay protection setting of T=2 greater than T=1 to isolate the fault impact range on its left side; the power supply # 2-1 trips with a time delay protection setting of T=3 greater than T=2; on the line where the circuit breakers 203 and 206 are located, the circuit breaker 206 trips with a time delay protection setting of T=3 greater than T=2; the power supply # 2-3 trips with a time delay protection setting of T=4 greater than T=3; on the line where the circuit breakers 202 and 205 are located, the circuit breaker 205 trips with a time delay protection setting of T=3 greater than T=2; the power supply # 2-2 trips with a time delay protection setting of T=4 greater than T=3; on the line where the circuit breakers 103 and 106 are located, the circuit breaker 106 trips with a time delay protection setting of T=3 greater than T=1; the power supply # 1-3 trips with a time delay protection setting of T=4 greater than T=3; on the line where the circuit breakers 102 and 105 are located, the circuit breaker 105 trips with a time delay protection setting of T=3 greater than T=1; the power supply # 1-2 trips with a time delay protection setting of T=4 greater than T=3, ensuring that all power supplies and circuit breakers meet the requirements of grading coordination. There is no current flowing to the circuit breaker 111 in the branch where the loads on the right side of bus tie circuit breaker 300 are located, so the circuit breakers 204, 211, and 212 do not trip; in the event of a short circuit fault occurs at the circuit breaker 111, the circuit breakers 101, 102, 103, 107, 108, 109, 110, 201, 202, 203, 207, 208, 209, and 210, which are used to respond to currents in the opposite direction of the short circuit current, do not trip.

In another embodiment, the situation where a short circuit fault occurs at the lines where the circuit breakers 112, 211, and 212 are located is similar to the situation where a short circuit fault occurs at the circuit breaker 111, and will not be repeated here.

In another embodiment, in the event of a short circuit fault occurs at the line where the circuit breaker 107 is located, the circuit breaker 107 trips with a time delay protection setting of T=0; on the line where the circuit breakers 102 and 105 are located, the circuit breaker 102 trips with a time delay protection setting of T=1 greater than T=0; the power supply # 1-1 trips with a time delay protection setting of T=3 greater than T=1; on the line where the circuit breakers 103 and 106 are located, the circuit breaker 106 trips with a time delay protection setting of T=3 greater than T=1; the power supply # 1-3 trips with a time delay protection setting of T=4 greater than T=3; on the branch where the circuit breaker 108 is located, the power supply # 1-2 trips with a time delay protection setting of T=4 greater than T=0; the bus tie circuit breaker 300 trips with a time delay protection setting of T=2 greater than T=1 to isolate the fault impact range on its left side; the power supply # 2-1 trips with a time delay protection setting of T=3 greater than T=2; on the line where the circuit breakers 202 and 205 are located, the circuit breaker 205 trips with a time delay protection setting of T=3 greater than T=2; the power supply # 2-2 trips with a time delay protection setting of T=4 greater than T=3; on the line where the circuit breakers 203 and 206 are located, the circuit breaker 206 trips with a time delay protection setting of T=3 greater than T=2; the power supply # 2-3 trips with a time delay protection setting of T=4 greater than T=3, ensuring that all circuit breakers and power supplies meet the requirements of grading coordination. On the lines where the loads on the left side of the bus tie circuit breaker 300 are located, there is no current flowing to the circuit breaker 107, and the circuit breakers 104, 111, and 112 do not trip; on the lines where the loads on the right side of the bus tie circuit breaker are located, there is no current flowing to the circuit breaker 107, and the circuit breakers 204, 211, and 212 do not trip; in the event of a short circuit fault occurs at the circuit breaker 107, the circuit breakers 101, 103, 105, 108, 109, 110, 201, 202, 203, 207, 208, 209, and 210, which are used to respond to currents in the opposite direction of the short circuit current, do not trip.

In another embodiment, the situation where a short circuit fault occurs at the lines where the circuit breakers 108, 109, and 110 are located is similar to the situation where a short circuit fault occurs at the circuit breaker 107, and will not be repeated here.

In another embodiment, in the event of a short circuit fault occurs at the line where the circuit breaker 101 is located, the circuit breaker 101 trips with a time delay protection setting of T=0; on the line where the circuit breakers 102 and 105 are located, the circuit breaker 105 trips with a time delay protection setting of T=3 greater than T=0; the power supply # 1-2 trips with a time delay protection setting of T=4 greater than T=3; on the line where the circuit breakers 103 and 106 are located, the circuit breaker 106 trips with a time delay protection setting of T=3 greater than T=0; the power supply # 1-3 trips with a time delay protection setting of T=4 greater than T=3; the bus tie circuit breaker 300 trips with a time delay protection setting of T=2 greater than T=0 to isolate the fault impact range on its left side; the power supply # 2-1 trips with a time delay protection setting of T=3 greater than T=2; on the line where the circuit breakers 202 and 205 are located, the circuit breaker 205 trips with a time delay protection setting of T=3 greater than T=2; the power supply # 2-2 trips with a time delay protection setting of T=4 greater than T=3; on the line where the circuit breakers 203 and 206 are located, the circuit breaker 206 trips with a time delay protection setting of T=3 greater than T=2; the power supply # 2-3 trips with a time delay protection setting of T=4 greater than T=3, ensuring that both the power supplies and circuit breakers meet the requirements of grading coordination. On the lines where the loads on the right side of the bus tie circuit breaker are located, there is no current flowing to the circuit breaker 101, and the circuit breakers 204, 211, and 212 do not trip; on the lines where the loads on the left side of the bus tie circuit breaker are located, there is no current flowing to the circuit breaker 101, and the circuit breakers 104, 111, and 112 do not trip; in the event of a short circuit fault occurs at the circuit breaker 101, the circuit breakers 102, 103, 107, 108, 109, 110, 201, 202, 203, 207, 208, 209, and 210, which are used to respond to currents in the opposite direction of the short circuit current, do not trip.

The situation where a short circuit fault occurs at different positions on the right side of the bus tie circuit breaker 300 is similar to the aforementioned situation where a short circuit fault occurs at different positions on the left side of the bus tie circuit breaker 300, and will not be repeated here.

In this way, when performing time delay grading coordination, with the presence of the bus tie circuit breaker, the short-circuit fault positions at farthest end of each line in all lines are taken into account, and when a short-circuit fault occurs at the corresponding position, the time delay protection settings of the circuit breakers in all possible short-circuit current paths that respond to the currents in the positive direction meet the requirements of grading coordination.

In addition, when performing time delay grading coordination, with the presence of the bus tie circuit breaker, it is ensured that the time delay protection settings of all circuit breakers and power supplies are configured, and that the power supplies and circuit breakers that respond to currents in the positive direction on all possible short-circuit current paths meet the requirements of grading coordination.

In the embodiment, the difference in the time delay grading coordination is determined in conjunction with the trip time of the circuit breaker.

In the embodiment shown in Figure 3, with the presence of the bus tie circuit breaker, the protection of the multiple power supply system with the bus tie circuit breaker can be achieved by configuring the time delay protection settings of the bus tie circuit breaker, other circuit breakers, and power supplies as described above.

The time delay protection setting for a specific power supply in the multiple power supply system is the maximum value of all possible time delay protection settings obtained by performing the time delay grading coordination on the power supply and the responding circuit breakers on the paths along the short-circuit current paths (regardless of whether they pass through the bus tie circuit breaker or not) where the power supply is located, starting from a short-circuit fault position at the farthest end of each line of all the lines.

The time delay protection setting of a circuit breaker that responds to a current in the positive direction is the maximum value of all possible time delay protection settings obtained by performing the time delay grading coordination on the circuit breaker and other responding circuit breakers on the paths along the short-circuit current paths (regardless of whether they pass through the bus tie circuit breaker or not) where the circuit breaker is located, starting from a short-circuit fault position at the farthest end of each line of all the lines.

In the embodiments, although not shown, the multiple power supply system of the present application may also include a loop.

On the other aspect of this application, a protection method for a circular power supply system is also provided.

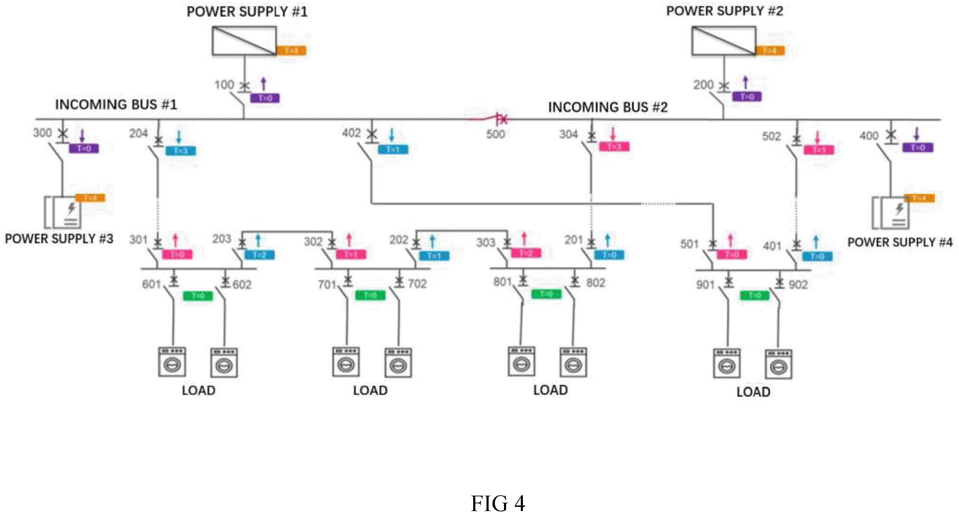

Figure 4 is a schematic diagram illustrating a protection method of a circular power supply system according to an embodiment of the present application.

As shown in Figure 4, the circular power supply system of the present application includes a power supply # 1, a power supply # 2, a power supply # 3, and a power supply # 4, but is not limited to them. In fact, the circular power supply system of the present application may include one or more power supplies, and the number of power supplies may be n', wherein n' may be an integer greater than or equal to 1. In the case where the circular power supply system only includes one power supply, that one power supply can supply power to all loops of the circular power supply system.

In the embodiment, the circular power supply system may also include a plurality of loads, such as the lower loads shown in Figure 4. The electrical energy of these loads is distributed through feeders of corresponding distribution cabinets, as shown in Figure 4, there are three distribution cabinets in the left loop and one distribution cabinet in the right loop.

Scenarios in which a plurality of power supplies are connected are also considered in the circular power supply system, for example, in addition to the power supply # 1 and the power supply # 2, the system can also include the power supply # 3 and the power supply # 4.

Technicians in this field should understand that the number and connection method of power supplies, the number and connection method of loads, the number and connection method of distribution cabinets, the number and connection method of loops in the circular power supply system, and topology of the circular power supply system shown in Figure 4 are all exemplary and not restrictive.

In this application, a) it is specified that the positive direction of a current is from a bus to a line; b) all circuit breakers on the loop only respond to short-circuit currents in the positive direction and do not trip against short-circuit currents in the negative direction; c) according to the direction of the short-circuit current, the time delay protection settings of all circuit breakers that respond to the short-circuit currents in the positive direction on the loop are configured to increase incrementally to meet the requirements of grading coordination.

In the embodiments of the present application, for the loop, circuit breakers with directional protection can be disposed, and the time delay protection settings are set from the clockwise (indicated by the pink arrow) and counterclockwise (indicated by the blue arrow) directions according to the possible current directions.

In the present application, a method for protecting a circular power supply system is provided, the circular power supply system includes a power supply and a loop, the loop includes n distribution cabinets connected to each other through lines to form a part of the loop. The method comprises: disposing one circuit breaker with directional protection respectively at both ends of n+1 lines on the loop, except for an incoming bus, so that a total of 2n+2 circuit breakers are disposed on the loop. Wherein all the 2n+2 circuit breakers respond to a current in a positive direction thereof and do not respond to a current in a negative direction thereof. Wherein the positive direction is a direction pointing from a bus closest to a corresponding circuit breaker towards a line, and the negative direction is a direction pointing from the line to the bus closest to the corresponding circuit breaker.

As shown in Figure 4, the circular power supply system of the present application includes a power supply # 1, a power supply # 2, a power supply # 3, and a power supply # 4, as well as two loops. Two loops each include a different number of (n) distribution cabinets. The three distribution cabinets on the left side of Figure 4 form part of the left loop (n=3), and the one distribution cabinet on the right side of Figure 4 forms part of the right loop (n=1). In the protection method of the circular power supply system in this application, one circuit breaker with directional protection is disposed respectively at both ends of n+1 lines on the loops except for the incoming buses (incoming bus # 1 and incoming bus # 2 in the upper part of Figure 4), so that a total of 2n+2 circuit breakers are disposed on the loops. As shown in Figure 4, a total of eight circuit breakers with directional protection are disposed on the loop by disposing one circuit breaker with directional protection respectively at both ends of the other 4 lines on the loop on the left side of Figure 4, except for the incoming bus # 1 and the incoming bus # 2; a total of four circuit breakers with directional protection are disposed on the loop by disposing one circuit breaker with directional protection respectively at both ends of the other 2 lines on the loop on the left side of the figure, except for the incoming bus # 1 and the incoming bus # 2. In the embodiment, the eight circuit breakers on the left loop of Figure 4 and the four circuit breakers on the right loop of Figure 4 all respond to the current in the positive direction thereof and do not respond to the current in the negative direction thereof. In the embodiment, the positive direction is a direction pointing from the bus closest to the corresponding circuit breaker toward the line, and the negative direction is a direction pointing from the line toward the bus closest to the corresponding circuit breaker.

In this application, when the circuit breakers that should respond to the current in the positive direction thereof on the lines where the 2n+2 circuit breakers are located are not working properly, all the 2n+2 circuit breakers are able to self-protect against abnormally large short-circuit currents in the negative direction thereof. In the embodiment, when circuit breakers that should respond to the current in the positive direction thereof on the lines where the eight circuit breakers on the left loop of Figure 4 and the four circuit breakers on the right loop of Figure 4 are located are not working properly, all the eight circuit breakers on the left loop of Figure 4 and the four circuit breakers on the right loop of Figure 4 are able to self-protect against abnormally large short-circuit currents in the negative direction.

In the embodiments, the circular power supply system of the present application may further include an incoming bus tie switch 500, which remains closed during normal operation.

In the embodiment, there are power supplies (the power supply # 1, the power supply # 3, and the power supply # 2, the power supply # 4, but not limited to) on both sides of the incoming bus tie switch 500 that supply power to the loops. In the embodiment, when a fault occurs in the incoming bus, the incoming bus tie switch 500 can cooperate with bus differential protection to isolate the fault range. In this way, in the event of a short circuit fault occurs in the incoming bus, the fault range can be isolated by disconnecting the incoming bus tie switch 500, maintaining normal power supply to the non-fault area and improving the stability of the distribution system.

In the embodiment, the incoming bus tie switch 500 may not have protection function.

In the embodiment, a time delay grading coordination is formed between n+1 circuit breakers whose positive direction is in the clockwise direction among the 2n+2 circuit breakers on the loop except for the incoming bus tie switch, and the time delay protection settings increase incrementally from the circuit breaker at the farthest end from the power supply to meet grading coordination requirements, and a time delay grading coordination is formed between n+1 circuit breakers whose positive direction is in the counterclockwise direction among the 2n+2 circuit breakers on the loop except for the incoming bus tie switch, and the time delay protection settings increase incrementally from the circuit breaker at the farthest end from the power supply to meet the grading coordination requirements.

In the embodiment, for example, as shown in Figure 4, a time delay grading coordination is formed between the four circuit breakers (circuit breakers 301, 302, 303, 304) whose positive directions are in the clockwise direction among the other eight circuit breakers (circuit breakers 301, 302, 303, 304, 201, 202, 203, 204) on the left loop except for the incoming bus tie switch 500, and their time delay protection settings increase incrementally from the circuit breaker 301 at the farthest end from the power supply ( the circuit breaker 301's time delay protection setting is T=0, the circuit breaker 302's time delay protection setting is T=1, the circuit breaker 303's time delay protection setting is T=2, and the circuit breaker 304's time delay protection setting is T=3), to meet the requirements of grading coordination. For another example, as shown in Figure 4, a time delay grading coordination is form between the four circuit breakers (circuit breakers 201, 202, 203, 204) whose positive directions are in the counterclockwise direction among the other eight circuit breakers (the circuit breakers 301, 302, 303, 304, 201, 202, 203, 204) on the left loop except for the incoming bus tie switch 500, and their time delay protection settings increase incrementally from the circuit breaker 201 at the farthest end from the power supply (the circuit breaker 201's time delay protection setting is T=0, the circuit breaker 202's time delay protection setting is T=1, the circuit breaker 203's time delay protection setting is T=2, and the circuit breaker 204's time delay protection setting is T=3) to meet the requirements of grading coordination.

In the embodiment, for example, as shown in Figure 4, a time delay grading coordination is formed between the two circuit breakers (the circuit breakers 501, 502) whose positive directions are in the clockwise direction among the other four circuit breakers (the circuit breakers 501, 502, 401, 402) on the right loop except for the incoming bus tie switch 500, and their time delay protection settings increase incrementally from the circuit breaker 501 at the farthest end from the power supply (the time delay protection setting of the circuit breaker 501 is T=0, and the time delay protection setting of the circuit breaker 502 is T=1) to meet the requirements of grading coordination. For another example, as shown in Figure 4, a time delay grading coordination is formed between the two circuit breakers (the circuit breakers 401, 402) whose positive directions are in the counterclockwise direction among the other four circuit breakers (the circuit breakers 501, 502, 401, 402) on the right loop except for the incoming bus tie switch 500, and their time delay protection settings increase incrementally from the circuit breaker 401 at the farthest end from the power supply (the time delay protection setting of the circuit breaker 401 is T=0, and the time delay protection setting of the circuit breaker 402 is T=1) to meet the requirements of grading coordination.

In the embodiment, circuit breakers with directional protection (as indicated by purple arrows, circuit breakers 100, 200, 300, and 400) are disposed on the lines where the power supply # 1, the power supply # 3, the power supply # 2, and the power supply # 4 are located. These circuit breakers respond to current from the bus and have instantaneous protection or a time delay protection setting of T=0. Technicians in this field should understand that although for the purpose of illustration, one circuit breaker with directional protection disposed on the lines where the power supply # 1, power supply # 2, power supply # 3, and power supply # 4 are located is shown in Figure 4 as an example, the present application is not limited to this. In fact, similar to the situation of the protection method of the multiple power supply system, one circuit breaker with directional protection can be disposed respectively at both ends of the lines where the power supply # 1, power supply # 2, power supply # 3, and power supply # 4 are located. The grading coordination situation and configuration for the time delay protection settings of the two circuit breakers disposed in this way and the corresponding power supplies, have been explained with reference to the protection method of the multiple power supply system, and will not be repeated here.

In the embodiment, one circuit breaker without directional protection (circuit breakers 601, 602, 701, 702, 801, 802, 901, 902) can be disposed on the lines where loads are located, the circuit breakers can be equipped with instantaneous protection, or the time delay protection settings of the circuit breakers can be T=0.

In the embodiment, the time delay protection setting of T=0 represents the minimum value among all possible time delay protection settings (e.g. T=0 to T=4).

In the embodiments, the power supply # 1 and the power supply# 3, as well as the power supply # 2 and the power supply# 4, may all have short-circuit fault ride through capability. In the embodiment, the protection method of the circular power supply system of the present application may further include: obtaining the time delay protection setting of the power supply by incrementing on the basis of a time delay protection setting determined according to the maximum value of the number of distribution cabinets connected to each other on each loop within the circular power supply system. For example, for the situation shown in Figure 4, the time delay protection setting (T=4) of the power supply can be obtained by incrementing on the basis of the time delay protection setting (T=3) determined according to the maximum value (n=3) of the number of distribution cabinets (n=3 on the left loop and n=1 on the right loop) connected to each other on each loop (left loop and right loop) within the circular power supply system.

In the embodiment, the number of distribution cabinets connected to each other on each loop can be an integer greater than or equal to 1. In the embodiment, the number of distribution cabinets forming a loop is less than or equal to 3, but the present application is not limited to this.

In the embodiment, the protection method of the circular power supply system of the present application further includes, obtaining the time delay protection setting (T=4) of the power supply by incrementing according to the number of buses (in the case of Figure 4, incoming bus # 1 and incoming bus # 2 are buses that are commonly connected to all of the power supply # 1, the power supply # 2, the power supply # 3, and the power supply # 4, which are defined as primary buses in the present application, and there is no bus between the power supply # 1, the power supply # 2, the power supply # 3, and the power supply # 4 and the incoming bus # 1 and the incoming bus # 2, that is, the number of buses is 0) between the power supply (the power supply # 1, the power supply # 3, and the power supply # 2, the power supply # 4) and a primary bus on the basis of the obtained time delay protection setting (T=4). In the present application, the bus to which all the power supplies are commonly connected is defined as the primary bus. For example, both the incoming bus # 1 and the incoming bus # 2 are primary buses. Technicians in this field should understand that when the number of buses between the power supply and the primary bus is m, the time delay protection setting of the power supply (T=4+m) can be obtained by incrementing according to the number of buses m on the basis of the obtained time delay protection setting (T=4).

In this application, as mentioned earlier, the bus to which all power supplies are connected can be defined as a primary bus, and there can also be m buses between each power supply and the primary bus, wherein m can be an integer greater than or equal to 0.

In the protection method of the circular power supply system in this application, the level difference in the time delay grading coordination is determined in conjunction with the trip time of the circuit breaker.

In this application, the protection methods for multiple power supply systems and circular power supply systems are described separately. Those skilled in the art should understand that the technical features described in the embodiments of the protection methods for multiple power supply systems can be arbitrarily combined with the technical features described in the protection methods for circular power supply systems without departing from the scope of the application.

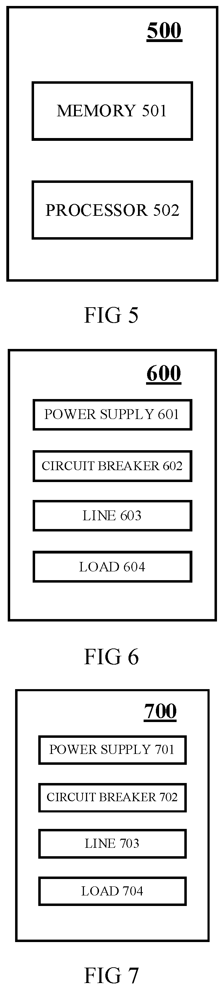

Figure 5 is a schematic structural diagram illustrating a circuit breaker with directional protection according to an embodiment of the present application.

As shown in Figure 5, a circuit breaker 500 may include a memory 501 and a processor 502. According to embodiments of the present application, the processor 502 can be coupled to the memory 501 and execute the method of the circuit breaker described herein.

Figure 6 is a schematic structural diagram illustrating a multiple power supply system according to an embodiment of the present application.

A multiple power supply system 600 according to embodiments of the present application includes a plurality of power supplies 601, a plurality of circuit breakers 602, a plurality of lines 603, and loads 604. The plurality of power supplies 601 supply power to the loads 604 via lines 603 on which a plurality of circuit breakers 602 are disposed/set. The plurality of circuit breakers 602 are disposed according to the protection method of the multiple power supply system of the present application.

In the embodiment, the plurality of power supplies 601 and the plurality of circuit breakers 602 participate in time delay grading coordination according to the protection method of the multiple power supply system of the present application to meet the requirements of grading coordination.

Optionally, the multiple power supply system 600 may also include a bus tie circuit breaker (not shown). In the case where the multiple power supply system 600 includes a bus tie circuit breaker, the bus tie circuit breaker also participates in the time delay grading coordination to meet the grading coordination requirements.

Figure 7 is a schematic structural diagram showing a circular power supply system according to an embodiment of the present application.

A circular power supply system 700 according to the embodiments of the present application includes a power supply 701, a plurality of circuit breakers 702, a plurality of lines 703, and loads 704. The power supply 701 supplies power to the loads 704 via lines 703 on which a plurality of circuit breakers 702 are disposed. The plurality of circuit breakers 702 are disposed/set according to the protection method of the circular power supply system of the present application. The loop of the circular power supply system 700 according to the present embodiment includes n distribution cabinets (not shown) connected to each other through lines to form a part of the loop.

In the embodiment, the power supply 701 and the plurality of circuit breakers 702 participate in time delay grading coordination according to the protection method of the circular power supply system in this application to meet the requirements of grading coordination.

In the embodiment, the circular power supply system 700 may also include an incoming bus tie switch (not shown).

Ordinary technicians in this field can realize that the units and algorithm steps described in the embodiments disclosed in this application can be implemented in electronic hardware, computer software, or a combination of both. In order to clearly illustrate the interchangeability of hardware and software, the composition and steps of each embodiment have been generally described according to their functions in the above description. Whether these functions are executed in hardware or software depends on the specific application and design constraints of the technical solution. Professional technicians can use different methods to achieve the described functions for each specific application, but such implementation should not be considered beyond the scope of this application.

Technicians in the relevant field can clearly understand that, for the sake of convenience and simplicity in description, the specific working processes of the systems, devices, and units described above can refer to the corresponding processes in the aforementioned method embodiments, which will not be repeated here.

In the several embodiments provided in this application, it should be understood that the disclosed systems, devices, and methods can be implemented in other ways. For example, the device embodiments described above are only illustrative. For example, the division of units is only a logical functional division. In practical implementation, there may be other division methods, such as multiple units or components being combined or integrated into another system, or some features being ignored or not executed. On the other hand, the mutual coupling or direct coupling or communication connection displayed or discussed can be indirect coupling or communication connection through some interface, device or unit, which can be electrical, mechanical or other forms.

The units described as separate components may or may not be physically separated, and the components displayed as units may or may not be physical units. They can be located in one place or distributed across multiple network units. Some or all of the units can be selected according to actual needs to achieve the purpose of this embodiment.

In addition, the functional units in various embodiments of the present application can be integrated into one processing unit, physically exist separately, or integrate two or more units into one unit. The integrated units mentioned above can be implemented in the form of hardware or software functional units.

If the integrated units are implemented in the form of software functional units and sold or used as independent products, they can be stored in a computer-readable storage medium. Based on this understanding, the technical solution of the present application essentially or partially contributes to the existing technology, or all or part of the technical solution can be embodied in the form of a software product, which is stored in a storage medium and includes several instructions for a computer device (which can be a personal computer, server, or network device, etc.) to perform all or part of the steps of the methods described in various embodiments of the present application. The aforementioned storage media include: USB flash drives, portable hard drives, read-only memory (ROM), random access memory (RAM), magnetic disks or optical disks, and various other media that can store program code.

The above is only a specific implementation of the present application, but the scope of protection of the present application is not limited to this. Any skilled person familiar with the technical field can easily think of changes or replacements within the technical scope disclosed in the present application, which should be included in the scope of protection of the present application. Therefore, the protection scope of this application should be based on the protection scope of the claims.

Further aspects of the invention are provided by the subject matter of the following clauses:
Clause 1. A circuit breaker characterized in that: respond to a current in a positive direction; and do not respond to a current in a negative direction, wherein the positive direction is a direction pointing from a bus or a power supply closest to the circuit breaker towards a line, and wherein the negative direction is a direction pointing from the line to the bus or the power supply nearest to the circuit breaker.
Clause 2. A method for protecting a multiple power supply system, the multiple power supply system includes a plurality of power supplies, and the method comprising: disposing a first circuit breaker and a second circuit breaker respectively at both ends of all lines except for a pure load branch, wherein the first circuit breaker and the second circuit breaker respectively respond to a current in a positive direction thereof and do not respond to a current in a negative direction thereof, wherein the positive direction is a direction pointing from a bus or a power supply closest to a corresponding circuit breaker toward a line, and wherein the negative direction is a direction pointing from the line towards the bus or the power supply nearest to the corresponding circuit breaker.
Clause 3. The method of Clause 2, wherein when a circuit breaker that should respond to a current in the positive direction thereof on the line where the first circuit breaker and the second circuit breaker are located is not functioning properly, both the first circuit breaker and the second circuit breaker are capable of self-protection against an abnormally large short-circuit current in the negative direction thereof.
Clause 4. The method of Clause 2 or Clause 3, wherein the number of the plurality of power supplies is n, and n is an integer greater than or equal to 2.
Clause 5. The method of any of Clauses 2 to 4, wherein a bus to which the plurality of power supplies are commonly connected is defined as a primary bus, and there are m buses between each power supply and the primary bus, wherein m is an integer greater than or equal to 0.
Clause 6. The method of any of Clauses 2 to 5, wherein in the case of a short line, the first circuit breaker and the second circuit breaker are the same circuit breaker, which responds according to different time delay protection settings in the positive direction and the negative direction.
Clause 7. The method of any of Clauses 2 to 6 further comprising: in the event that the power supply has short-circuit fault ride through capability, a circuit breaker close to the power supply of the first circuit breaker and the second circuit breaker is omitted, and only the other circuit breaker of the first circuit breaker and the second circuit breaker is disposed, and the power supply participates in time delay grading coordination.
Clause 8. The method of any of Clauses 2 to 7, wherein the multiple power supply system further includes a pure load branch, and the method further comprising: disposing a circuit breaker without directional protection on a line of the pure load branch.
Clause 9. The method of any of Clauses 2 to 8, further comprising: performing time delay grading coordination, starting from a short-circuit fault position at a farthest end in a line with a highest number of line levels among all lines in the multiple power supply system and along all possible short-circuit current paths, on all circuit breakers that respond to currents in the positive direction, to ensure that time delay protection settings of all circuit breakers that respond to currents in the positive direction meet requirements of grading coordination.
Clause 10. The method of Clause 9, wherein short-circuit fault positions at the farthest ends of each line in all lines are taken into account when performing the time delay grading coordination, and when a short-circuit fault occurs at a corresponding position, the time delay protection settings of the circuit breakers in all possible short-circuit current paths that respond to the currents in the positive direction meet requirements of grading coordination.
Clause 11. The method of Clause 9 or Clause 10, wherein it is ensured that time delay protection settings of all circuit breakers and power supplies are configured when performing the time delay grading coordination, and that the power supplies and circuit breakers that respond to currents in the positive direction on all possible short-circuit current paths meet requirements of grading coordination.
Clause 12. The method of any of Clauses 2 to 11, further comprising: a circuit breaker near a power supply and the power supply both participate in time delay grading coordination when the circuit breaker is not omitted.
Clause 13. The method of any of Clauses 2 to 12, wherein the multiple power supply system further includes a bus tie circuit breaker, which is a circuit breaker with directional protection.
Clause 14. The method of Clause 13, wherein the bus tie circuit breaker occupies a time delay protection setting and participates in time delay grading coordination.
Clause 15. The method of Clause 14, wherein the time delay protection setting of the bus tie circuit breaker is set to a first time delay protection setting and a second time delay protection setting, respectively, wherein the first time delay protection setting is for a short-circuit current flowing from a first side to a second side of the bus tie circuit breaker, and the first time delay protection setting is a maximum value among time delay protection settings determined by performing time delay grading coordination on all possible short-circuit current paths, starting from the farthest ends of all lines on the second side of the bus tie circuit breaker, wherein the second time delay protection setting is for a short-circuit current flowing from a second side to a first side of the bus tie circuit breaker, and the second time delay protection setting is a maximum value among time delay protection settings determined by performing time delay grading coordination on all possible short-circuit current paths, starting from the farthest ends of all lines on the first side of the bus tie circuit breaker.
Clause 16. The method of Clause 15, wherein, when the first time delay protection setting is equal to the second time delay protection setting, the bus tie circuit breaker is a circuit breaker without directional protection.
Clause 17. The method of Clause 16 further comprising: determining time delay protection settings of a power supply and a circuit breaker that responds to a current in the positive direction on the first side of the bus tie circuit breaker by performing time delay grading coordination on the basis of the first time delay protection setting of the bus tie circuit breaker, in the case that the first time delay protection setting is determined; and determining time delay protection settings of a power supply and a circuit breaker that responds to a current in the positive direction on the second side of the bus tie circuit breaker by performing time delay grading coordination on the basis of the second time delay protection setting of the bus tie circuit breaker, in the case that the second time delay protection setting is determined.
Clause 18. The method of any one of Clauses 9, 10, 11, 12, 14, 15, and 17, wherein a level difference in the time delay grading coordination is determined in conjunction with a trip time of a circuit breaker.
Clause 19. The method of any of Clauses 2 to 18, wherein the multiple power supply system further includes a loop.
Clause 20. A method for protecting a circular power supply system, the circular power supply system includes a power supply and a loop, the loop includes n distribution cabinets connected to each other through lines to form a part of the loop, the method comprising: disposing one circuit breaker with directional protection respectively at both ends of n+1 lines on the loop, except for an incoming bus, so that a total of 2n+2 circuit breakers are disposed on the loop, wherein all the 2n+2 circuit breakers respond to a current in a positive direction thereof and do not respond to a current in a negative direction thereof, wherein the positive direction is a direction pointing from a bus closest to a corresponding circuit breaker towards a line, and the negative direction is a direction pointing from the line to the bus closest to the corresponding circuit breaker.
Clause 21. The method of Clause 20, wherein when circuit breakers that should respond to currents in the positive direction thereof on lines where the 2n+2 circuit breakers are located are not working properly, all the 2n+2 circuit breakers are able to self-protect against abnormally large short-circuit currents in the negative direction thereof.
Clause 22. The method of Clause 20 or Clause 21, wherein the circular power supply system further includes an incoming bus tie switch, which remains closed during normal operation.
Clause 23. The method of Clause 22, wherein there are power supplies on both sides of the incoming bus tie switch that supply power to the loop.
Clause 24. The method of Clause 22 or Clause 23, wherein the incoming bus tie switch does not have a protective function.
Clause 25. The method of any of Clauses 22 to 24, wherein when a fault occurs in the incoming bus, the incoming bus tie switch cooperates with bus differential protection to isolate a bus fault range.
Clause 26. The method of any of Clauses 20 to 25, wherein, a time delay grading coordination is formed between n+1 circuit breakers whose positive direction is in the clockwise direction among the 2n+2 circuit breakers on the loop except for the incoming bus tie switch, and the time delay protection settings thereof increase incrementally from a circuit breaker at a farthest end from the power supply to meet grading coordination requirements, and a time delay grading coordination is formed between n+1 circuit breakers whose positive direction is in the counterclockwise direction among the 2n+2 circuit breakers on the loop except for the incoming bus tie switch, and the time delay protection settings thereof increase incrementally from a circuit breaker at a farthest end from the power supply to meet grading coordination requirements.
Clause 27. The method of any of Clauses 20 to 26, further comprising: disposing a circuit breaker with directional protection on a line where the power supply is located, which responds to a current from a bus and has instantaneous protection, or a time delay protection setting of the circuit breaker is T=0.
Clause 28. The method of any of Clauses 20 to 27 , further comprising: disposing a circuit breaker without directional protection on a line where a load is located, which has instantaneous protection, or the time delay protection setting of the circuit breaker is T=0.
Clause 29. The method of Clause 27 or Clause 28, wherein the time delay protection setting being T=0 represents a minimum value in possible delay protection settings.
Clause 30. The method of any of Clauses 20 to 29, wherein the power supply has short circuit fault ride through capability, and the method further comprising: obtaining a time delay protection setting of the power supply by incrementing on basis of a time delay protection setting determined according to a maximum value of a number of distribution cabinets connected to each other on each loop within the circular power supply system.
Clause 31. The method of Clause 30, further comprising: obtaining the time delay protection setting of the power supply by incrementing according to a number of buses between the power supply and a primary bus on basis of the obtained time delay protection setting, and a bus to which all power supplies are commonly connected is defined as the primary bus.
Clause 32. The method of Clause 30 or Clause 31, wherein a number of distribution cabinets connected to each other on each loop is an integer greater than or equal to 1.
Clause 33. The method of any of Clauses 20 to 32, wherein a number of power supplies is n', where n' is an integer greater than or equal to 1.
Clause 34. The method of Clause 31 or Clause 32, wherein, there are also m buses between each power supply and the primary bus, where m is an integer greater than or equal to 0.
Clause 35. The method of Clause 26, wherein a level difference in the time delay grading coordination is determined in conjunction with a trip time of a circuit breaker.
Clause 36. A multi power system configured to perform the method according to any one of Clauses 1-19.
Clause 37. A circular power supply system configured to perform the method according to any one of Clauses 20-35.

## Claims

1. A circuit breaker configured to:
respond to a current in a positive direction; and
not respond to a current in a negative direction;
wherein the positive direction is a direction pointing from a bus or a power supply closest to the circuit breaker towards a line, and
wherein the negative direction is a direction pointing from the line to the bus or the power supply nearest to the circuit breaker.

2. A multiple power supply system, the multiple power supply system comprising:
a plurality of power supplies; and
a first circuit breaker and a second circuit breaker respectively at the ends of all lines except for a pure load branch,
wherein the first circuit breaker and the second circuit breaker respectively respond to a current in a positive direction thereof and do not respond to a current in a negative direction thereof,
wherein the positive direction is a direction pointing from a bus or a power supply closest to a corresponding circuit breaker toward a line, and
wherein the negative direction is a direction pointing from the line towards the bus or the power supply nearest to the corresponding circuit breaker.

3. The multiple power supply system of claim 2, wherein when a circuit breaker that should respond to a current in the positive direction thereof on the line where the first circuit breaker and the second circuit breaker are located is not functioning properly, both the first circuit breaker and the second circuit breaker are capable of self-protection against an abnormally large short-circuit current in the negative direction thereof.

4. The multiple power supply system of claim 2 or claim 3, wherein the number of the plurality of power supplies is n, and n is an integer greater than or equal to 2.

5. The multiple power supply system of any of claims 2 to 4, wherein a bus to which the plurality of power supplies are commonly connected is defined as a primary bus, and there are m buses between each power supply and the primary bus,
wherein m is an integer greater than or equal to 0.

6. The multiple power supply system of any of claims 2 to 5, wherein in the case of a short line, the first circuit breaker and the second circuit breaker are the same circuit breaker, which responds according to different time delay protection settings in the positive direction and the negative direction.

7. The multiple power supply system of any of claims 2 to 6, wherein:
in the event that the power supply has short-circuit fault ride through capability, a circuit breaker close to the power supply of the first circuit breaker and the second circuit breaker is omitted, and only the other circuit breaker of the first circuit breaker and the second circuit breaker is disposed, and the power supply participates in time delay grading coordination.

8. The multiple power supply system of any of claims 2 to 7, wherein the multiple power supply system includes a pure load branch, and comprises a circuit breaker without directional protection on a line of the pure load branch.

9. The multiple power supply system of any of claims 2 to 8, configured to:
perform time delay grading coordination, starting from a short-circuit fault position at a farthest end in a line with a highest number of line levels among all lines in the multiple power supply system and along all possible short-circuit current paths, on all circuit breakers that respond to currents in the positive direction, to ensure that time delay protection settings of all circuit breakers that respond to currents in the positive direction meet requirements of grading coordination;
and optionally at least one of:
short-circuit fault positions at the farthest ends of each line in all lines are taken into account when performing the time delay grading coordination, and when a short-circuit fault occurs at a corresponding position, the time delay protection settings of the circuit breakers in all possible short-circuit current paths that respond to the currents in the positive direction meet requirements of grading coordination; or
it is ensured that time delay protection settings of all circuit breakers and power supplies are configured when performing the time delay grading coordination, and that the power supplies and circuit breakers that respond to currents in the positive direction on all possible short-circuit current paths meet requirements of grading coordination.

10. The multiple power supply system of any of claims 2 to 9, comprising a circuit breaker near a power supply and the power supply both participate in time delay grading coordination when the circuit breaker is not omitted.

11. The multiple power supply system of any of claims 2 to 10, wherein the multiple power supply system further includes a bus tie circuit breaker, which is a circuit breaker with directional protection; and
optionally:
the bus tie circuit breaker occupies a time delay protection setting and participates in time delay grading coordination, wherein optionally:
the time delay protection setting of the bus tie circuit breaker is set to a first time delay protection setting and a second time delay protection setting, respectively, wherein the first time delay protection setting is for a short-circuit current flowing from a first side to a second side of the bus tie circuit breaker, and the first time delay protection setting is a maximum value among time delay protection settings determined by performing time delay grading coordination on all possible short-circuit current paths, starting from the farthest ends of all lines on the second side of the bus tie circuit breaker; wherein the second time delay protection setting is for a short-circuit current flowing from a second side to a first side of the bus tie circuit breaker, and the second time delay protection setting is a maximum value among time delay protection settings determined by performing time delay grading coordination on all possible short-circuit current paths, starting from the farthest ends of all lines on the first side of the bus tie circuit breaker,
and optionally when the first time delay protection setting is equal to the second time delay protection setting, the bus tie circuit breaker is a circuit breaker without directional protection,
and optionally the multiple power supply system is configured to determine time delay protection settings of a power supply and a circuit breaker that responds to a current in the positive direction on the first side of the bus tie circuit breaker by performing time delay grading coordination on the basis of the first time delay protection setting of the bus tie circuit breaker, in the case that the first time delay protection setting is determined; and determine time delay protection settings of a power supply and a circuit breaker that responds to a current in the positive direction on the second side of the bus tie circuit breaker by performing time delay grading coordination on the basis of the second time delay protection setting of the bus tie circuit breaker, in the case that the second time delay protection setting is determined.

12. A circular power supply system, the circular power supply system comprising:
a power supply and a loop, the loop includes n distribution cabinets connected to each other through lines to form a part of the loop; and
one circuit breaker with directional protection respectively at both ends of n+1 lines on the loop, except for an incoming bus, so that a total of 2n+2 circuit breakers are disposed on the loop,
wherein all the 2n+2 circuit breakers respond to a current in a positive direction thereof and do not respond to a current in a negative direction thereof,
wherein the positive direction is a direction pointing from a bus closest to a corresponding circuit breaker towards a line, and the negative direction is a direction pointing from the line to the bus closest to the corresponding circuit breaker.

13. The circular power supply system of claim 12, wherein when circuit breakers that should respond to currents in the positive direction thereof on lines where the 2n+2 circuit breakers are located are not working properly, all the 2n+2 circuit breakers are able to self-protect against abnormally large short-circuit currents in the negative direction thereof.

14. The circular power supply system of claim 12 or claim 13, wherein the circular power supply system further includes an incoming bus tie switch, which remains closed during normal operation;
and optionally at least one of:
there are power supplies on both sides of the incoming bus tie switch that supply power to the loop;
the incoming bus tie switch does not have a protective function; or when a fault occurs in the incoming bus, the incoming bus tie switch cooperates with bus differential protection to isolate a bus fault range.

15. The circular power supply system of any of claims 12 to 14, wherein at least one of:
a time delay grading coordination is formed between n+1 circuit breakers whose positive direction is in the clockwise direction among the 2n+2 circuit breakers on the loop except for the incoming bus tie switch, and the time delay protection settings thereof increase incrementally from a circuit breaker at a farthest end from the power supply to meet grading coordination requirements, and a time delay grading coordination is formed between n+1 circuit breakers whose positive direction is in the counterclockwise direction among the 2n+2 circuit breakers on the loop except for the incoming bus tie switch, and the time delay protection settings thereof increase incrementally from a circuit breaker at a farthest end from the power supply to meet grading coordination requirements; a circuit breaker with directional protection is disposed on a line where the power supply is located, which responds to a current from a bus and has instantaneous protection, or a time delay protection setting of the circuit breaker is T=0, wherein optionally the time delay protection setting being T=0 represents a minimum value in possible delay protection settings;
a circuit breaker without directional protection is disposed on a line where a load is located, which has instantaneous protection, or the time delay protection setting of the circuit breaker is T=0, wherein optionally the time delay protection setting being T=0 represents a minimum value in possible delay protection settings; or
the circular power supply system is configured to obtain a time delay protection setting of the power supply by incrementing on basis of a time delay protection setting determined according to a maximum value of a number of distribution cabinets connected to each other on each loop within the circular power supply system, and optionally the circular power supply system is configured to obtain the time delay protection setting of the power supply by incrementing according to a number of buses between the power supply and a primary bus on basis of the obtained time delay protection setting, and a bus to which all power supplies are commonly connected is defined as the primary bus.
